# EUROPÄISCHE PATENTSCHRIFT

(11) **EP 0 604 596 B1**
(45) Veröffentlichungstag und Bekanntmachung des Hinweises auf die Patenterteilung: **29.10.1997**
(21) Anmeldenummer: 93905162.9
(22) Anmeldetag: 08.03.1993
(51) Int. Cl.: C08F 2/52

(54) **VERFAHREN ZUR ERZEUGUNG DÜNNER, MIKROPORENFREIER, LEITENDER POLYMERSCHICHTEN**
PROCESS FOR GENERATING THIN, MICROPORE-FREE, CONDUCTIVE POLYMER LAYERS
PROCEDE POUR PRODUIRE DES COUCHES DE POLYMERE CONDUCTRICES, FINES ET SANS MICROPORES

(30) Priorität: 09.03.1992 DE 4207422
(43) Veröffentlichungstag der Anmeldung: 06.07.1994
(73) Patentinhaber: HENNECKE, Manfred Prof. Dr. rer. nat. habil., 14169 Berlin (DE)
(72) Erfinder: KRUSE, Alexander, D-2800 Bremen 21 (DE); HENNECKE, Manfred, 14169 Berlin (DE)
(86) Internationale Anmeldenummer: DE9300205
(87) Internationale Veröffentlichungsnummer: WO9318069

(56) Entgegenhaltungen:
- DE-A- 3 541 721

## Beschreibung

Die Erfindung betrifft ein Verfahren zur Erzeugung dünner, mikroporenfreier, leitender Polymerschichten mittels Plasmapolymerisation dazu geeigneter Monomere unter Ausbildung dotierter drei-dimensionaler Netzwerkstrukturen, sowie Substrate, die mit solchen leitenden Polymeren beschichtet sind.

Organische Moleküle, die den elektrischen Strom leiten, sind seit langem bekannt. Dabei handelt es sich um Polymere, die eine hochkonjugierte Struktur aufweisen, wie z.B. Polyacetylen und Polypyrrol. Mit Hilfe von Dotierungsmitteln können Leitfähigkeiten, die im Bereich der metallischen Leitfähigkeit liegen, erreicht werden, weswegen diese Materialien auch "Synthetische Metalle" genannt werden. Lange hat man geglaubt, diese extrem leichten Leiter-materialien schnell technisch nutzen zu können, etwa für Batterien oder chemische Sensoren, denn organische Materialien besitzen gegenüber bisherigen, nicht-organischen Leitern erhebliche Vorteile: Sie sind wesentlich leichter, erlauben den Aufbau dreidimensionaler Schaltungen und können sehr dicht gepackt werden. Andererseits besitzen sie einen schwerwiegenden Nachteil: Sie sind nicht haltbar genug, sondern verändern relativ schnell ihre Struktur. Man geht davon aus, daß sich elektrisch leitende Kunststoffe erst durchsetzen werden, wenn ihre Haltbarkeit deutlich erhöht wird.

Eine Ursache für die entstehenden Strukturfehler sind offenbar die Kontaktstellen zwischen Polymer und nicht-organischen Materialien. Es ist also wichtig, die Struktur der Berührungsstellen zwischen unterschiedlichen Materialien genauestens zu kontrollieren. Die Prozesse der Herstellung und Verbindung der verschiedenen Materialien sind bei der weiteren Entwicklung der leitfähigen Polymere von zentraler Bedeutung.

Ein Ansatz, diese Probleme zu lösen, ist der Einsatz der Plasmapolymerisation zur Erzeugung elektrisch leitender Polymerschichten. Auch hier wird zwischen extrinsisch (gefüllte Polymere, z.B. mit Metallpartikeln) und intrinsisch (Eigenleitfähigkeit) leitenden Polymeren unterschieden. Laut DE-3541721-C2 werden derartige, intrinsisch leitfähige Polymerschichten durch die Plasmapolymerisation von ungesättigten organischen Molekülen erzeugt, während gleichzeitig ein bekanntes Dotierungsmittel, bzw. -gemisch in den Prozeß von außen eingebracht wird, wodurch dieses in die aufwachsende Schicht eingebaut wird. Kennzeichnend ist der Versuch, durch Plasmapolymerisation bei geringen Leistungsdichten hochkonjugierte Strukturen, die den klassischen Polymeren ähnlich sind, zu erzeugen.

Es hat sich aber bei einer Vielzahl von Versuchen erwiesen, daß sich nach diesem Verfahren herkömmliche Dotierungsmittel schlecht reproduzierbar in den Prozeß einbringen lassen. Besonders kritisch ist dies bei schwerflüchtigen Substanzen, etwa Iod. Weiterhin kann nicht ausgeschlossen werden, daß die Gemische aus Monomer und Dotierungsmittel, bevor sie in die eigentliche Reaktionszone gelangen, unkontrolliert miteinander reagieren, so daß die eigentlich reagierende Zusammensetzung des Gemisches nicht mehr bekannt ist.

In der DE-3541721-C2 wird davon ausgegangen, daß für eine elektrische Leitfähigkeit ein möglichst hochkonjugiertes Polymer vorliegen muß. Dies ist aber mit der Plasmapolymerisation - einer Fragmentpolymerisation - nur bei sehr geringen Leistungsdichten möglich und schränkt die Möglichkeiten der Plasmapolymerisation hinsichtlich der Steuerung des Verfahrens und der Einstellung der Eigenschaften der gebildeten Schichten stark ein. Hinzu kommen die sich aus diesen geringen Leistungsdichten ergebenden wirtschaftlichen Limitierungen.

M. K. Thakur, "Class of Conducting Polymers Having Nonconjugated Backbones", Macromolecules 1988, 21, S. 661, konnte an klassischen Polymeren zeigen, daß Leitfähigkeit auch ohne hochkonjugierte Doppelbindungssysteme möglich ist. Voraussetzung ist aber nach wie vor die Gegenwart von Doppelbindungen, die durch geeignete Gruppen aktiviert sein müssen, sowie von geeigneten Dotierungsmitteln, die nachträglich in das Polymer eingebracht werden.

Der Erfindung liegt die Aufgabe zugrunde, ein Verfahren zur Erzeugung elektrisch leitender Polymerschichten bereitzustellen, bei dem mit Hilfe der Plasmapolymerisation das für die Erzielung der Leitfähigkeit erforderlichte Dotierungsmittel in kontrollierbarer Weise in das Plasmapolymer eingebracht werden kann.

Diese Aufgabe wird mit einem Verfahren der eingangs genannten Art gelöst, bei dem das Dotierungsmittel in an das Monomer chemisch gebundener Form in die Plasmapolymerisation eingebracht wird, aus dem Monomer durch Einwirkung des Plasmas unmittelbar vor der Polymerbildung freigesetzt wird und dabei in die sich bildende Plasmapolymerschicht eingelagert wird. Als Monomer wird dabei eines der Formel DOT-R eingesetzt, worin DOT I, Br, SiF₃, PCl₄ oder SbCl₄ und R ein aromatischer Kohlenwasserstoffrest ist, der Substituenten und/oder Heteroatome enthalten kann.

Bevorzugte Ausführungsformen dieses Verfahrens sind Gegenstand der Unteransprüche.

Im erfindungsgemäßen Verfahren kommen Monomere zum Einsatz, die das Dotierungsmittel in chemisch gebundener Form enthalten. Beispiele hierfür sind Methyliodid, Ethyliodid, Iodbenzol, 2-Iodpyrrol, oder 2-Iodthiophen sowie die entsprechenden Bromverbindungen. In allen diesen Fällen besteht eine schwache Bindung zwischen eigentlichem Monomer und Dotierungsmittel, die unter der Einwirkung des Plasmas gespalten wird, so daß das Dotierungsmittel in der Reaktionszone in freier Form, d.h. radikalisch oder ionisch vorliegt. Dies ermöglicht die Steuerung des Gesamtgehalts an Dotierungsmittel über die Prozeßparameter. Ferner ergibt sich eine homogene Verteilung des Dotierungsmittels und eine ausgezeichnete Kontrolle des Dotierungsmittelanteils über die Monomerzufuhr. Insgesamt resultiert daraus eine bessere Steuerung, wie Reproduzierbarkeit des Gesamtprozesses.

Überraschenderweise wurde gefunden, daß die elektrische Leitfähigkeit der erhaltenen Polymerschichten auch ohne die Gegenwart hochkonjugierter Doppelbindungssysteme gegeben ist. Es werden selbst dann elektrisch leitende Polymere erhalten, wenn die Ausgangsmaterialien keinerlei geordnete Mehrfachbindungen im erzeugten Plasmapolymer erwarten lassen, beispielsweise bei Verwendung von Methyliodid. Das erfindungsgemäße Verfahren ist deshalb nicht auf die Verwendung von solchen Ausgangsmonomeren beschränkt, die mehr oder weniger stark ungesättigt sind und Anlaß zur Bildung von Mehrfachbindungen im Polymer geben könnten. Ferner ist das erfindungsgemäße Verfahren auch nicht auf solche Verfahrensbedingungen beschränkt, die der Bildung oder dem Erhalt eines konjugierten Doppelbindungssystems im Polymer dienen. Entscheidend ist die Bildung einer allseitig vernetzten Struktur mit darin eingelagertem Dotierungsmittel.

Erfindungsgemäß einsetzbar sind im allgemeinen für die Plasmapolymerisation genügend flüchtige dotierungsmittelhaltige Monomere, die unter der Einwirkung von Plasmen die Dotierungsmittelgruppe abspalten und zu Polymeren reagieren. Als Dotierungsmittelgruppe DOT in solchen dotierungsmittelhaltigen Monomeren DOT-R sind bevorzugt I, Br, SiF₃, PCl₄ und SbCl₄. Besonders bevorzugt sind I und Br. Andere Dotierungsmittelreste DOT, die von üblichen Dotierungsmitteln abgeleitet sind, können ebenfalls verwandt werden. Dabei ist es unerheblich, ob die Dotierungsmittelgruppe DOT als Substituent an das Monomer gebunden ist oder in dessen Gerüst oder cyclische Struktur eingebunden ist, solange sie durch die Plasmaentladung daraus freigesetzt wird.

Als dotierungsmittelhaltige Monomere DOT-R sind aromatische und heteroaromatische Verbindungen mit und ohne weiteren Substituenten geeignet, wie beispielsweise DOT-Benzol, -Biphenyl, -Naphthalin, -Pyridin, -Bipyridyl, -Diazin, -Thiophen, -Furan, -Chinolin, -Isochinolin, -Pyrrol, -Diazol, -Thiazol, -Oxazol, -Pyridazol, -Imidazol, -Styrol, -Phenylacetylen, -Stilben, -Divinylbenzol und -Benzonitril, insbesondere Iodbenzol, 2-Iodthiophen, 1-Iodnaphthalin, m-Iodtoluol und 4-Iod-m-xylol. Vorzugsweise ist R ein Kohlenwasserstoffrest mit bis zu 10 Kohlenstoffatomen, der 1 bis 3 O-, S- und/oder N-Atome enthalten kann.

Wesentlich ist, daß alle Verbindungen DOT-R unter der Einwirkung eines Plasmas das Dotierungsmittel bzw. einen Dotierungsmittelrest, der selbst nicht chemisch stabil sein muß, freisetzen und sich gleichzeitig als plasmapolymere Schicht Poly(R) abscheiden.

Für bestimmte Ausgestaltungen des erfindungsgemäßen Verfahrens ist es vorteilhaft, zusätzlich ein nicht polymerisierbares Gas als Hilfs- oder Trägergas zuzusetzen, beispielsweise um den Druck in der Gasphase zu erhöhen oder die Homogenität des Plasmas zu verbessern. Hierzu zählen insbesondere die Edelgase, sowie andere, unter den Bedingungen eines Niedertemperatur-Plasmas nicht polymerisierende Verbindungen hinreichender Flüchtigkeit, wie sie üblicherweise hierfür eingesetzt werden, etwa Sauerstoff, Wasserstoff, Stickstoff, CO₂ und CO. Bevorzugt ist Argon.

Das erfindungsgemäße Verfahren wird vorzugsweise unter den Bedingungen eines Niedertemperatur-Plasmas durchgeführt, das die Steuerung der Polymerisation wie der Dotierung des entstandenen Polymers in besonders guter Weise ermöglicht. Das Niedertemperatur-Plasma kann durch verschiedene Formen der elektrischen Entladung erzeugt werden:
1. Gleichspannungs- und Niederfrequenz-Glimmentladung,
2. Hochfrequenz-Glimmentladung,
3. Mikrowellenentladung/ECR-Plasmen (s.G. Franz, Kalte Plasmen, Grundlagen, Erscheinungen, Anwendungen, Springer Verlag 1990, S. 188 ff.),
4. Corona-Entladung,
5. unselbständige Glimmentladung.

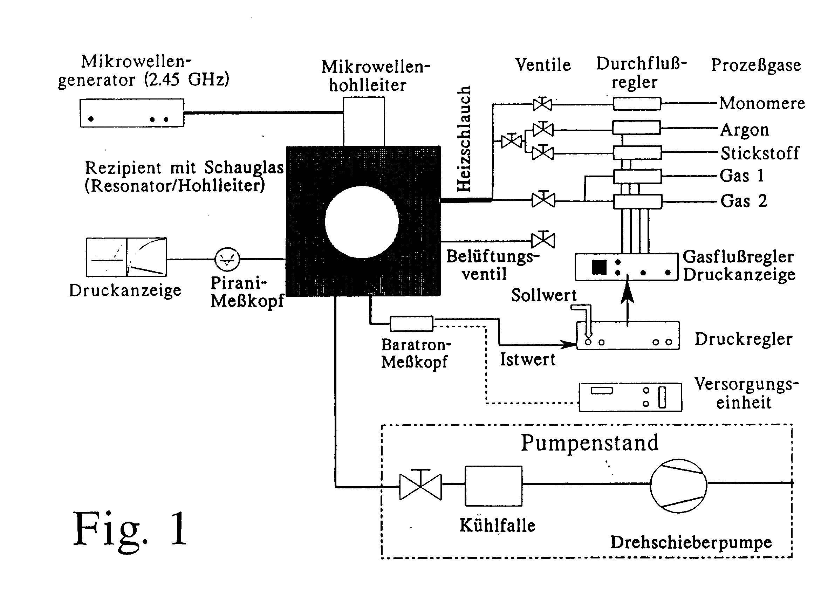

Besonders bevorzugt ist die Erzeugung eines Niedertemperatur-Plasmas durch Mikrowellenentladung, wobei die Temperaturen 150°C, vorzugsweise 100°C nicht übersteigen sollte und der Druck im Bereich von 10⁻³ bis 10 mbar, vorzugsweise von 10⁻² bis 1 mbar liegen sollte und der Mikrowellengenerator mit einer Frequenz im Bereich von 0,1 und 1000 GHz betrieben wird. Vorzugsweise wird bei 2,45 GHz gearbeitet (Fig. 1).

Die erfindungsgemäß hergestellten, elektrisch leitfähigen Polymerschichten weisen die allgemeinen Vorteile von mittels Niedertemperatur-Plasma erzeugten Polymerschichten auf. Sie sind hochvernetzt, unlöslich in bekannten Lösungsmitteln, äußerst hart und dabei sehr flexibel, frei von Mikroporen und chemisch wie thermisch sehr stabil.

Das erfindungsgemäße Verfahren erlaubt die Kontrolle und Variation der Leitfähigkeit der erzeugten Schichten innerhalb weiter Grenzen über die Wahl des Monomeren, den Gehalt an chemisch gebundenem Dotierungsmittel und die Einstellung der Plasmareaktion. Über die Wahl des Monomers, genauer gesagt das Kohlenstoff-Dotierungsmittel-Verhältnis können sehr hohe Dotierungsgrade eingestellt werden. Dabei wird das Dotierungsmittel nicht durch Diffusion eingebracht, sondern direkt in die aufwachsende Polymerschicht eingelagert. In der Reaktionszone wird immer neues Dotierungsmittel nachgebildet, was eine sehr homogene Verteilung über die Schichtdicke gewährleistet. Da das Dotierungsmittel an dem Monomer chemisch gebunden in den Prozeß eingebracht wird, ist das Monomer/Dotierungsmittel-Verhältnis des Systems immer konstant und immer reproduzierbar. Über die Beschichtungsparameter (Leistungsdichte, Druck, Durchfluß) kann eine Variation des Dotierungsmittelgehaltes - auch innerhalb der Schicht - erreicht werden. Eine vorzeitige chemische Reaktion, wie beispielsweise in einem Monomer-Dotierungsmittelgemisch, ist nicht möglich. Das erfindungsgemäße Verfahren erlaubt das Einbringen auch schwer flüchtiger und schwer dosierbarer Dotierungsmittel unter reproduzierbaren und definierten Bedingungen, was insbesondere bei Iod von großem Interesse ist.

Die im Verfahren gebildete UV-Strahlung führt zu einer vorteilhaften Nachvernetzung und Härtung des Polymers.

Bei dem erfindungsgemäßen Verfahren wird das Dotierungsmittel erst unmittelbar vor der Polymerbildung freigesetzt und direkt anschließend in die dichte, vernetzte Polymerschicht eingeschlossen. Die Dotierung ist deshalb temperaturstabil und wandert erst bei hohen Temperaturen in merklichem Umfang aus.

Das Verfahren erlaubt ferner die Herstellung dünner bis ultradünner leitfähige Polymerschichten, etwa solcher mit einer Dicke von 10 bis 1000 nm. Die Polymerschichten können auf plane wie auf unregelmäßig geformte Bauteile abgeschieden werden. Dabei kann die Schichtdicke beispielsweise über die Beschichtungszeit eingestellt werden. In jeder Hinsicht ist das Verfahren über die Beschichtungsparameter leicht zu kontrollieren. Es handelt sich um einen Trockenprozeß, der weniger umweltbelastend ist als herkömmliche, naß-chemische Verfahren zur Erzeugung elektrisch leitfähiger Polymerer.

Die Erfindung wird im folgenden anhand von Beispielen näher erläutert. Eine Apparatur zur Durchführung des Verfahren ist in Fig. 1 schematisch dargestellt.

### Beispiel 1

Ein Zylinder-Reaktor mit einem Volumen von 10 dm³, bestehend aus Quarzglas, wird nach dem Öffnen der Reaktortür mit den zu beschichtenden Gegenständen beschickt und anschließend verschlossen. Dann wird der Reaktor mittels einer Vakuumpumpe mit einer Saugleistung von 35 m³/h bis zu einem Restdruck von 2*10⁻⁴ mbar evakuiert. Der Druck wird mit einem Baratron-Meßkopf gemessen. Eine nachteilige Rückströmung von Kohlenwasserstoffen von der Vakuumpumpe her wird mit einer Kühlfalle unterdrückt.

Ein Strom gasförmigen 2-Iodthiophens (Monomer wurde auf ca. 80°C vorgeheizt) wird nach Öffnen der Ventilhähne V1, V5 und V9 über einen Durchflußregler (D1) so reguliert, daß mit einem Strom Argon-Trägergas (Ventile V4, V8 und Durchflußregler D4) ein Druck von 0,065 mbar erreicht wird. Das Verhältnis Momomer/Trägergas beträgt 10 : 1.

Nun wird durch Einschalten eines Mikrowellengenerators mit einer Frequenz von 2,45 GHz ein Plasma gezündet. Mit Hilfe eines Anpassungsnetzwerkes wird die reflektierte Leistung minimiert. Die Mikrowellenleistung wird auf 180 W eingestellt. Im Laufe von 15 Min. wird so eine leicht braune transparente Polymerschicht auf den Substraten abgeschieden. Anschließend wird der Mikrowellengenerator abgeschaltet und die Monomerzufuhr geschlossen und der Reaktor erneut bis zum Restdruck von 2*10⁻⁴ mbar evakuiert. Dann wird der Reaktor über Ventil V11 belüftet und die Substrate entnommen.

Die Eigenschaften der Polymerschichten variieren mit der Position der Substrate mit ihrer Position zur Durchflußrichtung. Die elektrische Leitfähigkeit der Polymerschicht liegt im Bereich von 10-10⁻²S cm⁻¹ bei einer Schichtdicke von 50 mm. Das mittels ESCA (Electron Spectroscopy for Chemical Analysis) ermittelte Verhältnis von Iod zu Kohlenstoff beträgt ca. 1 : 100.

### Beispiel 2

Es wird analog zu Beispiel 1 verfahren, als Monomer jedoch Iodmethan verwandt. Argon diente auch hier wieder als Trägergas (Anteil 10%); Druck 1*10⁻¹ mbar. Die Beschichtungszeit betrug 45 Min. Die Mikrowellenleistung betrug 150 W. Die erhaltene Polymerschicht war leicht bräunlich, jedoch transparent. Die Schichtdicke betrug 100 mm und das I/C-Verhältnis (mit ESCA ermittelt) 1 : 11. Die Leitfähigkeit betrug ca. 4*10⁻⁵ S cm⁻¹.

### Beispiel 3

Es wird analog zu Beispiel 1 verfahren, als Monomer jedoch Iodbenzol verwandt. Argon diente auch hier wieder als Trägergas (Anteil 10 %); der Druck betrug 5*10⁻² mbar. Bei einer Mikrowellenleistung von 150 W wurde 10 Min. beschichtet. Die Schicht hatte eine hellbraune Färbung. Die Schichtdicke betrug 500 mm, das I/C-Verhältnis wurde zu 1 : 30 ermittelt. Es konnte eine Leitfähigkeit von ca. 5*10⁻³ S cm⁻¹ gemessen werden.

## Patentansprüche

1. Verfahren zur Erzeugung dünner, mikroporenfreier, elektrisch leitender Polymerschichten mittels Plasmapolymerisation dazu geeigneter Monomere unter Ausbildung dotierter dreidimensionaler Netzwerkstrukturen mit darin eingelagertem Dotierungsmittel, dadurch gekennzeichnet, daß das Dotierungsmittel in an das Monomer chemisch gebundener Form in die Plasmapolymerisation eingebracht und aus dem Monomer durch Einwirkung des Plasmas freigesetzt wird, wobei als Monomer eines der Formel
DOT-R
eingesetzt wird, worin DOT I, Br, SiF₃, PCl₄ oder SbCl₄ und R ein aromatischer Kohlenwasserstoffrest ist, der Substituenten und/oder Heteroatome enthalten kann.

2. Verfahren nach Anspruch 1, dadurch gekennzeichnet, daß DOT Br oder I ist.

3. Verfahren nach Anspruch 1, dadurch gekennzeichnet, daß R ein aromatischer oder heteroaromatischer Kohlenwasserstoffrest mit bis zu 10 Kohlenstoffatomen ist, der ein bis drei O-, S- und/oder N-Atome enthalten kann.

4. Verfahren nach einem der Ansprüche 1 bis 3, dadurch gekennzeichnet, daß die Polymerisation in einem Niedertemperatur-plasma stattfindet.

5. Verfahren nach einem der Ansprüche 1 bis 4, dadurch gekennzeichnet, daß zur Erzeugung des Plasmas ein Mikrowellengenerator mit 0,1 bis 1000 GHz verwandt wird, wobei die Temperatur im Reaktionsraum 100°C nicht übersteigen sollte und der Druck 10⁻² bis 1 mbar beträgt.

6. Verfahren nach einem der Ansprüche 1 bis 5, dadurch gekennzeichnet, daß die Plasmapolymerisation in Gegenwart eines Trägergases stattfindet.

7. Verfahren nach Anspruch 6, dadurch gekennzeichnet, daß als Trägergas Argon verwandt wird.

8. Substrat mit einer leitenden Polymerschicht, hergestellt nach dem Verfahren eines der Ansprüche 1 bis 7.

9. Substrat nach Anspruch 8, gekennzeichnet durch eine Schichtdicke der leitenden Polymerschicht von 10 bis 1000 nm.

## Claims

1. Method of producing thin electrically conducting polymer layers free of micropores, by means of plasma polymerisation of monomers suitable to this end, with formation of doped three-dimensional reticulated structures with an interstitial doping agent, **characterised in** that said doping agent, in a form chemically combined with said monomer, is introduced into the plasma polymerisation process and liberated from said monomer under the action of said plasma, wherein a monomer satisfying the general formula
DOT-R
is employed wherein DOT is I, Br, SiF₃, Pcl₄ or SbCl₄ and R is an aromatic hydrocarbon group which may contain substituents andlor heteroatoms.

2. Method according to Claim 1, **characterised in** that DOT is Br or I.

3. Method according to Claim 1, **characterised in** that R is an aromatic or heteroaromatic hydrocarbon group having up to 10 carbon atoms, which may contain one to three O, S and/or N atoms.

4. Method according to any of Claims 1 to 3, **characterised in** that the polymerisation is carried out in a low-temperature plasma.

5. Method according to any of Claims 1 to 4, **characterised in** that a microwave generator of 0.1 to 1000 GHz is used for generating the plasma, with the temperature in the reaction chamber expediently not exceeding 100°C and at a pressure of 10⁻² à 1 mbar.

6. Method according to any of Claims 1 to 5, **characterised in** that the plasma polymerisation is performed in the presence of a carrier gas.

7. Method according to Claim 6, **characterised in** that argon is employed as carrier gas.

8. Substrate including a conductive polymer layer, produced by the method of any of Claims 1 to 7.

9. Substrate according to Claim 8, **characterised by** a thickness of the conductive polymer layer within the range from 10 to 1000 nm.

## Revendications

1. Procédé à produire des couches minces au polymère conductrices sans micropores, par voie de polymérisation au plasma de monomères appropriés à ces fins, en formant des structures réticulaires tridimensionnelles à un agent dope y intercalé, **caractérisé en ce** que ledit agent dope, sous forme chimiquement combinée audit monomère, est introduit dans la polymérisation au plasma et dégagé dudit monomère sous l'action du plasma, un monomère répondant à la formule
DOT-R
étant utilisé, dans laquelle DOT est I, Br, SiF₃, Pcl₄ ou SbCl₄ et R est un groupe hydrocarburé aromatique qui peut contenir des groupes substituants et/ou des hétéroatomes.

2. Procédé selon la revendication 1, **caractérisé en ce** que DOT est Br ou I.

3. Procédé selon la revendication 1, **caractérisé en ce** que R est un groupe hydrocarburé aromatique ou hétéroaromatique à jusqu'à 10 atomes de carbone, qui peut contenir un à trois atomes de O, S et/ou N.

4. Procédé selon une quelconque des revendications 1 à 3, **caractérisé en ce** que la polymérisation se fait dans un plasma à basse température.

5. Procédé selon une quelconque des revendications 1 à 4, **caractérisé en ce** qu'un générateur de micro-ondes à 0.1 à 1000 GHz est utilisé afin d'engendrer le plasma, à une température dans la chambre de réaction avantageusement ne surpassant pas 100°C et à une pression de 10⁻² à 1 mbar.

6. Procédé selon une quelconque des revendications 1 à 5, **caractérisé en ce** que la polymérisation au plasma est réalisée en présence d'un gaz porteur.

7. Procédé selon la revendication 6, **caractérisé en ce** qu'on utilise l'argon comme gaz porteur.

8. Substrat à une couche au polymère conductrice, produit par le procédé selon une quelconque des revendications 1 à 7.

9. Substrat selon la revendication 8, **caractérisé par** une épaisseur de la couche au polymère conductrice dans la gamme entre 10 et 1000 nm.
